# EUROPÄISCHE PATENTSCHRIFT

(11) **EP 1 189 959 B1**
(45) Veröffentlichungstag und Bekanntmachung des Hinweises auf die Patenterteilung: **31.03.2004**
(21) Anmeldenummer: 99904764.0
(22) Anmeldetag: 12.01.1999
(51) Int. Cl.: C08F 291/08, C08F 283/00, C08G 8/30, C08G 61/00

(54) **COPOLYMERISATE BZW. PFROPFPOLYMERISATE VON PHENOLEN, VERFAHREN ZU DEREN HERSTELLUNG UND DEREN VERWENDUNG**
COPOLYMERS OR GRAFT POLYMERS OF PHENOLS, METHOD FOR THEIR PRODUCTION AND THEIR USE
COPOLYMERISATS ET PLUS PRECISEMENT POLYMERISATS GREFFES DE PHENOLS, PROCEDE DE FABRICATION ET UTILISATION DESDITS COPOLYMERISATS

(43) Veröffentlichungstag der Anmeldung: 27.03.2002
(73) Patentinhaber: STOCKHAUSEN GmbH & Co. KG, 47805 Krefeld (DE)
(72) Erfinder: HÜTTERMANN, Aloys, D-37075 Göttingen (DE); MAI, Carsten, D-37075 Göttingen (DE)
(74) Vertreter: Harders, Gerhard
(86) Internationale Anmeldenummer: PCT/EP1999/000121
(87) Internationale Veröffentlichungsnummer: WO 2000/042085

(56) Entgegenhaltungen:
- EP-A- 0 416 864
- EP-A- 0 481 815
- US-A- 4 182 803
- US-A- 5 278 055
- BLINKOVSKY ET AL: "Journal of Polymer Science Part A : Polymer Chemistry, Vol.31, (1993)." XP002104560 in der Anmeldung erwähnt siehe Seite 1839 - Seite 1846

## Beschreibung

Die vorliegende Erfindung betrifft neuartige hydrophile Phenolcopolymerisate bzw. Phenolpfropfpolymerisate und ein durch Enzyme katalysiertes Verfahren zu deren Herstellung in Lösung, bei dem die Polymerisat- und Pfropfausbeute unter der Einwirkung von Peroxidverbindungen hoch ist. Damit kann die Bildung von unerwünschten, nicht gepfropften Nebenbestandteilen weitgehend zurückgedrängt werden. Weiterhin umfaßt die Erfindung deren Verwendung als Baustein in Kondensationsharzen, als Binde- und Agglomeriermittel, als Wasser und wäßrige Flüssigkeiten absorbierende Polymere, als Flockungshilfsmittel, als Verdickungsmittel, als Hilfsmittel bei der Erdölbohrung (Bohrspülflüssigkeiten) und Förderung, als Suspendier- und Dispergierhilfsmittel sowie als Hilfsmittel bei der Textil- und Faserveredlung.

Niedermolekulare phenolische Verbindungen sind als Inhibitoren für Polymerisationsvorgänge bekannt und werden technisch zu Stabilisierung von polymerisationsfähigen Monomeren eingesetzt [CD Römpp Chemie Lexikon-Version 1.0, Georg Thieme Verlag 1995]. Lediglich von Ligninen, die als höhermolekulare Abkömmlinge des Phenylpropans anzusehen sind, ist bekannt, daß sie in einer radikalischen Pfropfcopolymerisation als Baustein benutzt werden können.

So beschreibt die US 4 687 828 hochmolekulare Ligninpfropfpolymere, die in polaren, aprotischen Lösemitteln unter Verwendung der Monomere Acrylamid und Acrylamidomethylpropansulfonsäure in einer Stickstoff-Atmosphäre hergestellt werden. Als Initiatorsystem wird eine Kombination aus Calciumchlorid, Schwefelsäure, Cer(IV)-Salz und Autooxidationsprodukten des Dioxans (Hydroperoxide) eingesetzt. Nach einer Reaktionszeit von 2 Tagen bei 30°C wird das Polymerisat in einem Nichtlösemittel ausgefällt und abgetrennt. Polymerisate mit einer erhöhten Reinheit und besserer Löslichkeit erhält man durch Wiederauflösen in Wasser, mehrtägiges Dialysieren und Gefriertrocknen. Angaben über den Pfropfgrad werden nicht gemacht, jedoch ergibt sich aus den Beispielen, daß nur etwa 40 Gew.% der eingesetzten Menge an Lignin wiedergefunden wird, der Verlust an Monomer bewegt sich im Rahmen des Ausbeuteverlustes von ca. 80%. Andere Monomertypen werden nach diesem Verfahren nicht angewandt. Die Pfropfpolymerisate werden zur Verwendung als Verdicker, Flutpolymere und Bohrspüladditive vorgeschlagen.

Die DE 43 31 878 A1 beschreibt die Herstellung von Ligninpfropfpolymeren unter Verwendung von radikalisch oxidierenden Enzymen, wobei als Substrate Wasserstoffperoxid für Peroxidasen und Sauerstoff für Phenoloxidasen zugeführt werden. Es lassen sich danach in Wasser, organischen Lösemitteln oder Wasser/Lösemittel-Gemischen alle organischen Verbindungen auf Lignin pfropfen, die mindestens drei Kohlenstoffatome und eine Sauerstoff-, Stickstoff- und oder Mehrfachbindungsfunktion enthalten. Die Polymerisatausbeute ist gering und beträgt gemäß Beispiel 4 nur 26%. Auch die Pfropfausbeute ist bei diesem enzymatischen Polymerisationsverfahren niedrig.

Blinkovsky [Journal of Polymer Science:Part A:Polymer Chemistry, Vol.31, 1839-1846(1993)] beschreibt die Copolymerisation von Phenolen mit Lignin unter Verwendung von Meerrettichperoxidase in Gegenwart von Wasserstoffperoxid in Wasser/Dimethlyformamid-Mischungen als Reaktionsmedium. Ethylenisch ungesättigte Monomere werden nicht verwendet. Die Polymerisate können als Duroplaste eingesetzt werden.

Aus dem Stand der Technik sind keine Phenolcopolymerisate bzw. Phenolpfropfpolymere bekannt, bei denen niedermolekulare Phenole mit ethylenisch ungesättigten Monomeren in hoher Polymerisatausbeute gepfropft bzw. copolymerisiert werden.

Es bestand daher die Aufgabe Phenolcopolymerisate bzw. Phenolpfropfpolymere aus Phenol und ethylenisch ungesättigten Monomeren bereitzustellen sowie ein Verfahren zur Umsetzung von Phenol und Phenolderivaten mit ethylenisch ungesättigten Monomeren zu finden, bei dem die polymerisationsinhibierende Wirkung von Phenolen nicht zum Tragen kommt und bei dem hohe Polymerisatausbeuten und hohe Pfropfausbeute ermöglicht werden und die Pfropfreaktion in für technische Prozesse akzeptablen Reaktionszeiten auszuführen ist. Eine weitere Aufgabe der Erfindung bestand darin, Polymerprodukte aus Phenolen mit hydrophilen neutralen, anionischen, kationischen ungesättigten Monomeren bereitzustellen, die einer Verwendung in Wasser oder wäßrigen Flüssigkeiten zugänglich sind und die einem biologischen Abbau zugänglich sind.

Die Aufgabe wird überraschenderweise dadurch gelöst, daß man eine durch oxidierende Enzyme katalysierte Co- bzw. Pfropfpolymerisation von ungesättigten Monomeren auf Phenole mit mindestens einer OH-Gruppe pro aromatischem Sechserring in Gegenwart von organischen Peroxiden oder organischen Hydroperoxiden oder anorganischen Peroxiden durchführt. Dabei kommt es erstaunlicherweise weder zu einer Schädigung der Enzyme durch die Peroxide noch zu einer Erhöhung des Homopolymeranteils, wie es beim Zusatz von peroxidischen Initiatoren zu erwarten ist. Es ist gegenüber der Verwendung von Wasserstoffperoxid bzw. Sauerstoff eine deutliche Steigerung der Polymerisationsausbeute zu verzeichnen und es steigt der Anteil des gepfropften Monomers im Pfropfpolymer. Offenbar ist es überraschenderweise möglich, durch die Kombination aus Peroxiden und oxidierenden Enzymen, die Phenoxy-Radikalkonzentration nahezu unabhängig vom Mechanismus des Kettenstarts zu regulieren, so daß die Reduktion des Peroxids in weit geringerem Maße stattfindet als erwartet.

Der Einsatz von Peroxiden bei der enzymatischen. Copolymerisation bzw. Pfropfung hat sich für die Erhöhung der Ausbeute als entscheidend herausgestellt. Ihre Löslichkeit in dem zur Copolymerisation bzw. Pfropfung eingesetzten Lösemittel bzw. Lösemittelgemisch vorausgesetzt, werden die Peroxide bzw. ihre Mischungen bezogen auf die eingesetzten Monomeren in Mengen von 0,01 Gew.% bis 10 Gew.%, bevorzugt von 0,1 Gew.% bis 5 Gew.% und besonders bevorzugt von 0,25 Gew.% bis 2 Gew.% verwendet. Beispielhaft zu nennende organische aliphatische, cycloaliphatische und aromatische Peroxide sind t-Butylhydroperoxid, Mono- und Dihydroxyperoxide des Dioxans, Acetylcyclohexansulfonylperoxid, Diacetylperoxidicarbonat, Dicyclohexylperoxidcarbonat, Di-2-ethylhexylperoxidicarbonat, tert.-Butylperneodecanoat, tert.-Butylperpivalat, Dioctanoylperoxid, Dilauroylperoxid, Dibenzoylperoxid, tert.-Butylper-2-ethyl-hexanoat, tert.-Butylpermaleinat, Bis-(ter.-butylperoxid)-cyclohexan, tert.-Butylperoxiisopropylcarbonat, tert.-Butylperacetat, 2,2'-Bis-(tert.-butylperoxi)-butan, Dicumylperoxid, Di-tert.-butylperoxid, Ditert.-amylperoxid, Pinanhydroperoxid, p-Methanhydroperoxid, Cumolhydroperoxid, Peroxyphthalat. Als anorganische Peroxide sind beispielsweise Persulfate, Perborate und Perphosphate erfindungsgemäß einsetzbar. Oftmals ist es von Vorteil, wenn anorganische Peroxide mit organischen Peroxiden oder organischen Hydroperoxiden gemeinsam eingesetzt werden. Besonders bevorzugt sind t-Butylhydroperoxid und Mono- und Dihydroxyperoxide des Dioxans zu verwenden.

Der Einsatz von Redox-Coinitiatoren kann die Polymerisat- und Pfropfausbeute positiv beeinflussen. Beispielhaft seien die Schwermetallsalze von Kupfer, Cobalt, Eisen, Mangan, Nickel und Chrom erwähnt, wobei sich Fe²⁺ und Mn²⁺ besonders bewährt haben. Reduzierende Komponenten wie beispielsweise Ascorbinsäure, Natriumsulfit, Natriumbisulfit, Natriumformaldehydsulfoxylat führen zu einer deutlichen Reduzierung der Polymerisationsaktivität. Die Mitverwendung von Redox-Coinitiatoren gestattet es, die Polymerisation bei tieferer Temperatur durchzuführen. Die üblicherweise verwendeten Mengen an Redox-Coinitiatoren betragen etwa 0,01 bis 5 % bei reduzierend wirkenden Verbindungen und 0,1 bis 100 ppm, vorzugsweise 0,5 - 10 ppm bei Schwermetallen.

Die erfindungsgemäß einzusetzenden, ligninmodifizierenden Enzyme bestehen aus Oxidasen, wie beispielsweise Laccasen, Lignin-Peroxidasen, Mn-Peroxidasen bzw. deren Mischungen. Vorzugsweise werden Laccasen verwendet. Die Einsatzkonzentration der Enzyme kann in weiten Grenzen schwanken und richtet sich u.a. nach dem Enzym-Typ und dem verwendeten Initiatorsystem sowie der Anzahl der zu erzeugenden Phenoxyradikale. Bezogen auf die eingesetzten Monomere ergeben sich Richtkonzentrationen von 200 bis 0, 1 U pro g Monomer, vorzugsweise von 100 bis 1 U pro g Monomer und besonders bevorzugt von 25 bis 1 U pro g Monomer. Als Enzymeinheit U ist diejenige Enzymmenge definiert, die pro Minute 1 mMol Substrat umsetzt.

Zur Erhöhung von Aktivität und Stabilität der Enzyme in organischen Lösemitteln können diese in Enzym-Matrix-Komplexe eingebunden werden. Derartige Enzym-Matrix-Komplexe, und ihre Herstellung werden in der EP 354 485 beschrieben.

Zur Co- bzw. Pfropfpolymerisation werden phenolische Verbindungen eingesetzt, die durch unterschiedliche funktionelle Gruppen substituiert sein können, z. B. durch C-haltige Substituenten, wie z. B. Alkyl- und Alkenylgruppen, vorzugsweise C₁ bis C₆, O-haltige Substituenten, wie Carbonsäure-, Aldehyd-, Alkoxy-Gruppen, vorzugsweise C₁ bis C₆, insbesondere Methoxy-, N-haltige Substituenten, wie Amino- oder Alkylaminogruppen, vorzugsweise C₁ bis C₆, Halogensubstituenten, S-haltige Substituenten, wie etwa Sulfonat, Glucosid- oder andere Naturstoffderivate.
Die Funktionalität der dabei verwendeten Verbindungen sollte die Zahl von 4 Substituenten nicht überschreiten, da andernfalls aus sterischen Gründen eine Inkorporierung erschwert wird. Vorzugsweise beträgt die Zahl der Substituenten 2 bzw. 3.

Als Substituenten der phenolischen Verbindungen kommen insbesondere in Frage:
1 bis 4 Hydroxylgruppen, vorzugsweise 1 bis 3, z. B. Phenol, Hydrochinon, Brenzcatechin, Resorcin, Phloroglucin. Vorzugsweise sollten bei Di- bz. Trihydroxyverbindungen die Hydroxylgruppen in ortho- oder para-Stellung zueinander stehen, da diese ein niedrigeres Redoxpotential als meta-ständige Hydroxylgruppen tragende Phenole aufweisen. Aldehyde/Ketone, Carbonsäuren: Aldehyd-, Keto- und Carboxylgruppen setzen das Redoxpotential der phenolischen Verbindungen herauf. Um ein optimales Redoxpotential zu erhalten, kann diese Erhöhung durch elektronenliefernde Substituenten, wie Hydroxl-, Alkoxyl, z. B. Methoxyl, oder Aminogruppen kompensiert werden. Beispiele sind: Mono-, Di- oder Trihydroxybenzaldehyde, Aminohydroxybenzaldehyde, Vanillin, Syringaldehyd, Mono-, Dioder Trihydroxybenzoesäuen, vorzugsweise 2,3-, 3,4-, 2,5-Dihydroxybenzoesäure, Salicylsäure, Syringasäure, Vanillinsäure, Gallussäure.
Alkoxygruppen, insbesondere Methoxygruppen, z. B. 2,6-Dimethoxyphenol, Guajakol. Aminogruppen: primäre, sekundäre oder tertiäre Aminogruppen, bevorzugt C₁ bis C₆, oder in Form von Ammoniumsalzen.
Alkyl- und Alkenylgruppen: Aliphatische Seitengruppen, bevorzugt C₁ bis C₆, an denen sich die genannten Substituenten befinden können, beispielsweise 4-Ally-2-methoxyphenol (Eugenol, Anol und 3,4-Dihydroxyzimtsäure (Kaffeesäure), Biphenyle oder polyphenolische Verbindungen, deren aromatische Ringe über aliphatische Gruppen verknüpft sein können, Azoverbindungen, Aldazine.
Zucker bzw. Polysaccharidgruppen: Die phenolischen Verbindungen können über zusätzliche aromatische Hydroxylgruppen Etherbindungen enthalten, wobei mindestens eine phenolische Hydroxylgruppe unsubstituiert bleiben muß, oder über Carboxylgruppen Esterbindungen mit Zuckern bzw. Polysacchariden enthalten, z. B. Tannine.

Phosphatgruppen: Als Phosphorsäureester, verestert über zusätzliche Hydroxylgruppen. Sulfonatgruppen: beispielsweise 2,5-Dihydroxybenzolsulfonsäure.

Oftmals ist es von Vorteil, wenn die Phenole nicht einzeln, sondern als Mischung zu Pfropfreaktion eingesetzt werden.

Als Phenole können erfindungsgemäß beispielsweise auch wasserlösliche Umsetzungsprodukte aus Phenolen und aliphatischen Aldehyden eingesetzt werden. Durch die erfindungsgemäße Reaktion ist dann eine Modifikation der Eigenschaften dieser thermisch selbstvernetzenden Moleküle möglich, etwa in Form einer Verbesserung der Klebrigkeit oder Flexibilität durch Umsatz mit Acrylaten.

Aufgrund des erfindungsgemäßen enzymatischen Verfahrens lassen sich eine Vielzahl von ungesättigten organischen Verbindungen für die Polymerisationsreaktion heranziehen. Als ungesättigte Verbindungen können für die enzymatische Pfropfung beispielsweise die folgenden, unter a) bis d) genannten anionischen, kationischen und neutralen wasserlöslichen Monomerbausteine bzw. deren Mischungen verwendet werden. Die enzymatische Reaktion erlaubt auch die Copolymerisation mit den unter e) genannten hydrophoben Monomerbausteinen. Aus der Vielfalt der erfindungsgemäß einsetzbaren Monomeren ergibt sich ein breites Anwendungsspektrum, da sowohl kationische, anionische als auch amphotere Polymerisate herstellbar sind.
a) Wasserlösliche, Säuregruppen tragende, ethylenisch ungesättigte Monocarbonsäuren, deren Anhydride und deren Salze; Sulfonsäuren sowie ungesättigte Dicarbonsäuren, deren Anhydride sowie deren Halbester bzw. Halbamide. Beispielhaft seien genannt (Meth)acrylsäure, (Meth)allylsulfonsäure, Vinylessigsäure, 2-Acrylamido-2-methylpropansulfonsäure, Vinylsulfonsäure, Styrolsulfonsäure, Vinylphosphonsäure, Maleinsäure, Fumarsäure, Itaconsäure sowie die Halbester und Halbamide der zuvor genannten Dicarbonsäuren, wobei die Halbester und Halbamide durch Reaktion der entsprechenden Säureanhydride mit Alkoholen, Aminen und Aminoalkoholen zugänglich sind. Bevorzugte Säuregruppen tragende Monomere sind Acrylsäure, Methacrylsäure, Maleinsäure und Maleinsäureanhydrid, Acrylamido-2-methylpropansulfonsäure und (Meth)allylsulfonsäure bzw. deren Salze.
b) Zu den ungesättigten Verbindungen der Gruppe b) gehören nichtionische wasserlösliche Monomere, beispielsweise (Meth)acrylamid, (Meth)acrylnitril, Hydroxyethyl(meth)acrylat, N-Vinylpyrrolidon, N-Vinylimidazol, N-Vinylacetamid, N-Vinylformamid, N-Vinyl-N-Methylacetamid, N-Methylol(meth)acrylamid sowie alkoxylierte Monomere, zu denen man entweder durch Alkoxylierung von ethylenisch ungesättigten, mindestens eine Hydroxy- oder Aminogruppe tragenden Verbindungen oder aber durch die Umsetzung der Alkoxyaddukte von gesättigten aliphatischen, cycloaliphatischen, aromatischen Alkoholen, Aminen oder Thiolen mit ethylenisch ungesättigten Carbonsäuren, reaktiven Carbonsäurederivaten oder Allylhalogeniden gelangt. Beispielhaft seien genannt die Ethylen- und /oder Propylenoxidaddukte von (Meth)allylalkohol, (Meth)allylamin, wie auch Hydroxyethyl(meth)acrylat, gegebenenfalls weitere umgesetzt mit reaktiven gesättigten Säurederivaten. Weiterhin seien genannt die Reaktionsprodukte von vorzugsweise einseitig endverschlossenem Ethylenglykol, Isopropylglykol, Butylglykol sowie Nonylphenol, Isotridecanol mit Ethylen- oder Propylenoxid und Weiterreaktion der Alkylenoxidaddukte mit (Meth)acrylsäure, Allylchlorid oder anderen reaktiven, ungesättigten Säurederivaten wie zum Beispiel den Säureanhydriden, den Säurehalogeniden oder den Säureestern. Unter diesen Addukten werden bevorzugt Methoxypolyethylenglykol-(meth)acrylate, Nonylphenolpolyglykol(meth)acrylate und Allylalkohole mit jeweils 5 bis 30 Ethylenoxideinheiten.
c) Als Bausteine der Gruppe c) finden Monomere Verwendung, die dem Polymer eine kationische Ladung verleihen können oder in Kombination mit anionischen Monomeren amphotere Polymerisate bilden. Beispielhaft sind N,N-Dimethylaminopropyl(meth)acrylamid, N,N-Dimethylaminoethyl(meth)acrylat, N,N-Dimethylaminopropyl(meth)acrylat zu erwähnen,
   wobei der Aminstickstoff gegebenenfalls quaterniert oder neutralisiert ist.
   Bevorzugte Verwendung finden N,N-Dimethylaminoethylacrylat und N,N-Dimethylaminopropylacrylamid.
d) Zur Herstellung von wasserquellbaren, aber nicht mehr wasserlöslichen oder von höhermolekularen, verzweigten, aber noch teilweise löslichen Polymeren kann der Einsatz von vernetzend wirkenden Monomeren in begrenzter Menge erforderlich sein. Diese vemetzend wirkenden Substanzen werden entweder während der Polymerisation einpolymerisiert oder aber anschließend zur Vernetzung der bereits bestehenden Polymermoleküle eingesetzt.
   Als Vernetzer können alle Verbindungen verwendet werden, die mindestens zwei ethylenisch ungesättigte Doppelbindungen oder eine ethylenisch ungesättigte Doppelbindung und eine gegenüber Säuregruppen reaktive funktionelle Gruppe oder mehrere gegenüber Säuregruppen reaktive funktionelle Gruppe enthalten. Beispiele hierfür sind: Methylenbisacrylamid, Acrylate und Methacrylate von Polyolen wie Butandiol-diacrylat, Hexandiol-dimethacrylat, Polyethylenglycol-diacrylat und Trimethylolpropantriacrylat und/oder die Acrylate und Methacrylate der oxalkylierten genannten Polyole, wie oxalkyliertes Trimethylolpropantriacrylat. Weiterhin Di- und Polyester von Polyolen und oxethylierten Polyolen mit ungesättigten Monocarbonsäuren.und/oder Polycarbonsäuren, wie (Meth)acrylsäureestern von 1,2-Propylenglycolpentaerythrit, Glycerin und Polyglycerin sowie Monoester ungesättigter Alkohole und ethoxylierter ungesättigter Alkohole mit ungesättigten Monocarbonsäuren und/oder Monocarbonsäuren wie (Meth)allylacrylat und -methacrylat, Mono(meth)allylmaleinat, (Meth)allylpolyethylenglycoletheracrylat und -methacrylat, (Meth)allylitaconat, (Meth)allylpolyethylenglycolether-itaconat und
   Mono(meth)allylpolyethylenglycolether-maleinat. Weiterhin Diallylacrylamid, Diallyphthalat, Diallyladipat, Triallylcitrat und Trimonoallylpolyethylenglycolethercitrat. Weiterhin Allylether von Di-und Polyolen und deren Oxethylate, wie die Diallylether von Ethylenglycol, Diethylenglycol, Polyethylenglycol, die Triallylether von Glycerin, oxethyliertem Glycerin, Trimethylolpropan und oxethyliertern Trimethylolpropan, die Tetraallylether von Pentaerythrit und oxethliertem Pentaerythrit sowie Tetraallyloxiethan sowie Polyglycidylether, wie z. B. Ethylenglycoldiglycidether und Glyceringlycidylether. Weiterhin Amine und/oder deren Salze und Amide mit mindestens zwei ethylenisch ungesättigten Alkylgruppen, wie Di- und Triallylamin und Tetraallylamoniumchlorid.

Als Monomere der Gruppe e) sind alle mit a), b), c) und d) copolymerisierbaren Monomere einsetzbar. Sie werden zur weiteren Modifizierung der Polymere eingesetzt und ermöglichen dadurch eine optimale Anpassung an die erfindungsgemäß zu verwendenden Polymere. Demzufolge können die Monomere nach d) sowohl einen hydrophilen als auch einen hydrophoben Charakter haben. Beispielhaft seien, Vinylacetat, Vinylpropionat, (Meth)acrylsäureester, Versaticsäurevinylester, Styrol genannt.

Der Anteil der Phenolkomponente in der Monomermischung sollte 50 % nicht überschreiten, da dies andernfalls zu geringeren Ausbeuten und Molekulargewichten führt.
Zur Erzielung möglichst hoher Molekulargewichte von über 200 000 g/Mol ist es oftmals vorteilhaft, die Menge an Phenol nicht über 25 Gew.%, vorzugsweise nicht über 15 Gew.% und besonders bevorzugt nicht über 10 Gew.% steigen zu lassen. Diese Mengenangaben sind Durchschnittswerte und können in Abhängigkeit von der Reaktivität des Phenolderivates schwanken. Mitunter muß zur Erlangung hoher Molekulargewichte die Phenolmenge im Reaktionsansatz dem ausgewählten Monomer angepaßt werden, da die Monomere aufgrund unterschiedlicher Reaktivität bzw. regelnder Eigenschaften selbst auch einen Einfluß auf das Molekulargewicht der Polymere haben.

In Fällen von ungenügender Löslichkeit der Phenolkomponente im Reaktionsmedium ist es möglich, durch den Zusatz von Tensiden, das betreffende Phenolderivat doch noch der Pfropfreaktion zugänglich zu machen. Die Auswahl des oder der Tenside richtet sich einerseits nach der Struktur der Phenolkomponente und andererseits nach der Zusammensetzung des Reaktionsmediums und erfolgt nach dem Fachmann geläufigen Methoden.

Vielfach lassen sich die Gebrauchseigenschaften bereits vorvernetzter Polymerisate durch eine Nachvernetzung deutlich verbessern. Diese Nachvernetzung kann prinzipiell bei allen Feuchtigkeitsgehalten des vorvernetzten Polymergels durchgeführt werden. In einer bevorzugten Ausführungsform erfolgt die Trocknung des Polymergels bis zu einem Wassergehalt von 5 - 20 Gew.%, vorzugsweise von höchstens 10 Gew.% bei Temperaturen im Bereich von 100 - 190 °C. Anschließend wird das Trockengut auf eine Korngröße im Bereich von 20 - 3000 µm vorzugsweise 150 - 850 µm zu Polymerisatpulver gemahlen. Die Nachvernetzung des Polymerisats erfolgt auf der Oberfläche der Polymerpartikel mit mindestens einem, zwei- oder mehrfach funktionellen, mit Säuregruppen, vorzugsweise Carboxylgruppen, reagierenden Vernetzungsmittel, das vorzugsweise in Form einer wasserhaltigen Lösung aufgebraucht wird. Als Nachvernetzungsmittel sind Polyole wie beispielsweise Ethylenglycol, 1,2-Propylenglycol, 1,4-Butandiol, Glycerin, Di- und Polyglycerin, Pentaerythrit, die Oxethylate dieser Polyole sowie deren Ester mit Carbonsäuren oder der Kohlensäure geeignet. Der Zusatz einer Veresterungskatalysators, z. B. p-Toluolsulfonsäure oder Phosphorsäure ist vorteilhaft. Weitere geeignete Vernetzungsmittel sind Di- und Polyglycidylether von Polyolen und Polyethylenglycolen und Salze von mehrwertigen Kationen. Die Nachvernetzer werden in Mengen von 0,01 bis 20 Gew.%, vorzugsweise 0,1 bis 10 und besonders bevorzugt von 0,1 bis 3 Gew.% bezogen auf das Polymerisat eingesetzt.

Die Nachvernetzung wird üblicherweise bei Temperaturen im Bereich von 100 - 250 °C, vorzugsweise 150 - 200 °C in einem Mischaggregat, beispielsweise in einem Naramischer vorgenommen. Sehr reaktive Nachvernetzer können auch bei niedrigeren Temperaturen von 20 - 100°C eingesetzt werden. Häufig erfolgt die Nachvernetzung auch an in inerten Lösemitteln suspendierten Pfropfpolymerteilchen.

Entsprechend der anwendungsspezifischen Eigenschaften im Hygienebereich werden für die Synthese von vernetzten superabsorbierenden Polymeren monomerseitig überwiegend Säuregruppen tragende Monomere verwendet und in einer besonders bevorzugten Ausführungsform Acrylsäure und Methacrylsäure, wohingegen superabsorbierende Polymere in der Pflanzenaufzucht zusätzlich Acrylamid, Methacrylamid und sulfonatgruppenhaltige Monomerbestandteile aufweisen. Flockungsmittel werden sowohl auf anionischer als auch auf kationischer Monomerbasis hergestellt, als Comonomer wird bevorzugt Acrylamid eingesetzt. Die im Bereich der Wasserenthärtung und der Wasch- und Reinigungsmittel eingesezten Polymerisate werden vorzugsweise überwiegend aus Carboxylatgruppen enthaltenden Monomeren aufgebaut, bewährt haben sich hier aber auch sulfonat- und alkoxylatgrppenhaltige Comonomere.

Das erfindungsgemäße Verfahren wird in Wasser, org. Lösungsmitteln oder Wasser/Lösungsmittel-Gemischen durchgeführt. Als Lösemittelkomponenten kommen unter anderem Dimethylsulfoxid, Aceton, Dioxan, Methylpyrrolidon bzw. deren Gemische in Frage. Für den Fall, daß Wasser/Lösemittelgemische verwendet werden, richtet sich das Mischungsverhältnis von Wasser zu Lösemittel natürlich auch nach der Mischbarkeit der beiden Komponenten. In einer bevorzugten Ausführungsform wird jedoch ein Wasseranteil von mehr als 50 Gew.% eingesetzt. Besonders bevorzugt ist eine rein wäßrige Fahrweise ohne org. Lösemittel.

Die Polymerisation kann in normalen Polymerisationsreaktoren erfolgen, die mit entsprechenden Aggregaten zur Rührung, Dosierung fester, flüssiger und gasförmiger Stoffe, zur Heizung und zur Kühlung ausgerüstet sind. Die Phenolkomponente wird im Reaktor zusammen mit dem Enzym vorgelegt und dann sofort oder im Laufe der Polymerisation mit den Monomerkomponenten versetzt. Oft ist es von Vorteil, erst einen kleinen Anteil der Monomeren mit vorzulegen und den Rest über eine längere Zeit zu dosieren. Für den Fall der Herstellung vernetzter Polymerisate sind entsprechend andere Polymerisationsapparte, wie etwa Reaktionsmischer oder Polymerisationsbänder erforderlich. Die Temperaturen bei der enzymatischen Polymerisation sind nach oben durch die Temperaturstabilität des Enzyms und nach unten durch die Aktivität des Enzyms bzw. die Polymerisationsgeschwindigkeit begrenzt. Die Polymerisationszeit kann je nach der Aktivität des Enzyms, der Phenolkomponente, der Monomere und der Pfropfpolymerisationstemperatur zwischen 1 h und 2 Tagen schwanken.

Während der Polymerisation kann eine Schutzgasatmosphäre erforderlich sein, um radikalische Kettenabbrüche zu vermeiden.

Der pH-Wert während der erfindungsgemäßen Polymerisation kann in einem Bereich von 3 bis 8, vorzugsweise von 4 bis 5 schwanken. Der Zeitpunkt der Neutralisation der Monomerkomponenten richtet sich nach dem erforderlichen pH-Wert der Polymerisationslösung und kann demnach vor, während oder nach der Polymerisation liegen bzw. in Teilschritten kontinuierlich oder diskontinuierlich erfolgen. Als Neutralisationsmittel können anorganische und organische Basen und Säuren eingesetzt werden, beispielsweise Ammoniak, Ammoniumhydroxyd, Alkali-hydroxide, -carbonate und -hydrogencarbonate, Amine, Alkylamine, Alkanolamine, Hydroxylamin, Mineralsäuren, organische Sulfonsäuren. Die Ansatzkonzentration während der Polymerisation kann schwanken und hängt u.a. davon ab, ob hohe oder niedrige Molekulargewichte erzeugt werden sollen, ob hohe oder niedrige Monomeranteile vorliegen, ob vernetzte oder lösliche Polymere hergestellt werden sollen oder ob Wasser, organische Lösemittel oder Mischungen von Wasser mit org. Lösemitteln als Reaktionsmedium eingesetzt werden. Auf jeden Fall ist aber zu beachten, daß die Ansatzkonzentration möglichst so ausgelegt wird, daß die geforderte optimale Polymersationstemperatur im Bereich 10 - 60 °C vorzugsweise 20 - 50 °C beibehalten werden kann.

Eine Zugabe von anorganischen Peroxiden gegen Ende der Polymerisation ermöglicht eine nachhaltige Reduzierung der Restmonomergehalte, wodurch andere aufwendige Verfahren zu deren Abtrennung unterbleiben können. Besonders vorteilhaft werden diese Perverbindungen durch Zusatz von reduzierenden Verbindungen aktiviert. Dadurch ist es möglich, die relativ hohen Zerfallstemperaturen der anorganischen Perverbindungen zu unterschreiten. Natriumperoxodisulfat, Kaliumperoxodisulfat, Ammoniumperoxodisulfat, Peroxyborat sind Beispiele für erfindungsgemäß zu verwendende anorganische Perverbindungen. Anstelle der zuvor erwähnten anorganischen Peroxide lassen sich auch Azoinitiatoren voteilhaft verwenden. Die folgenden Azoinitiatoren sind eine beispielhafte Aufzählung von erfindungsgemäß einsetzbaren Initiatoren: 2,2'-Azobis(4-methoxy-2,4-dimethylvaleronitril), 2,2'-Azobis-((2-methyl-N-phenylpropionamidin)dihydrochlorid, 2,2'-Azobis-(2-methylpropionamidin)dihydrochlorid, 2,2'-Azobis-(2,4-dimethylvaleronitril), 2,2'-Azobis-(isobutyronitril), Dimethyl-2,2'-azobisisobutyrat.

Aufgrund der phenolischen Bestandteile zeigen die Polymerisate eine mehr oder weniger ausgeprägte Färbung, die gegebenenfalls durch oxidative oder reduktive Zusätze gemildert oder beseitigt werden kann. In diesem Zusammenhang haben sich u.a. Wasserstoffperoxid, Sulfitsalze oder phosphorige Säure für die Bleiche bewährt.

Nach Abschluß der Polymerisation werden die löslichen Polymerisate entweder direkt ihrer Anwendung zugeführt, oder aber bei speziellen Anforderungen durch Entfernung des Lösungsmittels (Sprühtrocknung/Verdampfung/Gefriertrocknung) oder durch Fällung als Pulver isoliert. Die Fällung kann durch Einstellung des pH-Wertes erfolgen und/oder durch Zugabe von Nichtlösemitteln. Für einige Anwendungen hat sich eine Dialyse zur Entfernung niedrigmolekularer Anteile bewährt. Dialysemembranen mit unterschiedlichen Ausschlußgrenzen sind käuflich erhältlich.

Prinzipiell kann die Polymerisation auch in der Art einer Suspensionspolymerisation durchgeführt werden, wobei die wäßrige Reaktionsphase unter Zuhilfenahme von Suspensionsstabilisatoren in einer organischen Phase, die z. B. aus Cyclohexan bestehen kann, dispergiert wird und in Form dieser Suspension auspolymerisiert wird. Danach kann das Wasser azeotrop aus der Suspension abdestilliert und die festen Polymerisatteilchen können problemlos von der organischen Phase abfiltriert und nach Trocknung ihrer Verwendung zugeführt werden.

Vernetzte Polymerisate werden nach oder bereits während der Polymerisation zerkleinert, gewölft, getrocknet und entsprechend ihrem Verwendungszweck auf eine bestimmte Teilchengröße gemahlen.

Die Molekulargewichtsmittel der Polymere sind in weiten Grenzen beeinflußbar und bewegen sich in einem Bereich von 1000 bis zu 10 Mio. Aufgrund anwendungstechnischer Erfordernisse sind für verschiedene Einsatzgebiete unterschiedliche Molekulargewichte erforderlich. So werden beispielsweise im Bereich der Flockungs- und Verdickungshilfsmittel sehr hochmolekulare Polymerisate mit Molekulargewichten von vorzugsweise über 1 Million eingesetzt, zur Wasserenthärtung, Dispergierung und Bohrspülung liegen die Molekulargewichte der erfindungsgemäßen Polymere vorzugsweise unter 100 000, besonders bevorzugt unter 50 000 und ganz besonders bevorzugt unter 25 000. Im Bereich der Verwendung als Bindemittel für organische und anorganische Materialien sind mittlere bis hohe Molekulargewichte erforderlich. Wesentliche Steuerungsparameter für das Molekulargewicht liegen einerseits in der Reaktivität und der Menge der Phenolkomponente und andererseits im Enzym/Monomer-Verhältnis.

Die biologische Abbaubarkeit der erfindungsgemäßen Pfropfpolymerisate ist überraschend, da nach den Erkenntnissen des bisherigen Standes der Technik beide Reaktionskomponenten als nicht abbaubar eingestuft wurden. Die Abbaubarkeit der Polymerisate wurde durch die Einwirkung von Weißfäule hervorrufenden Basidomyceten untersucht und anhand der Verringerung des Molekulargewichtes nachgewiesen.

Mit den folgenden Beispielen wird die Herstellung und Anwendung der erfinderischen Polymerisate näher erläutert.

Liste der benutzten Abkürzungen für Monomere und Initiatoren:
- AMPS: Acrylamidomethylpropansulfonsäure
- t-BHP: tert.-Butylhydroperoxid
- DHBS: Dihydroxybenzoesäure
- MAS: Natriummethallylsulfonat
- MBAA: Methylenbisacrylamid
- DIMAPA: Dimethylaminopropylacrylamid

### Beispiele und Vergleichsbeispiele

In den folgenden Versuchen wird Laccase beispielhaft für die Gruppe der erfindungsgemäß zu verwendenden oxidierenden Enzyme eingesetzt. Es handelt sich um ein Enzym der Firma Novo, Dänemark. Die Enzymaktivität beträgt etwa 190U/mL. Als Enzymeinheit U ist diejenige Enzymmenge definiert, die pro Minute 1 mMol Substrat umsetzt.

### Beispiele 1 bis 9

Jeweils 120 mg der in der folgenden Tabelle genannten Phenole wurden in wenig Natronlauge gelöst und 1 g Acrylamid in 7 ml Wasser hinzugefügt. Der pH-Wert wurde mit 10%iger Schwefelsäure auf 4,5 eingestellt. Anschließend wurden 20 µl t-Butylhydroperoxid und 50 µl Laccase (Novo) hinzupipettiert. Nach einer Reaktionszeit im Wasserbad von 2 Tagen wurde die erhaltene Lösung in einem Dialyseschlauch mit einem cut-off von 1000 g/mol gegen Wasser dialysiert, um den Restmonomeranteil zu entfernen. Das Retentat wurde anschließend gefriergetrocknet und die Ausbeute bestimmt:

| **Bsp.** | **Phenol** | **Ausbeute** | **Molckulargewicht** | | **Phenolumsatz** |
|---|---|---|---|---|---|
| | | **[g]/[%]** | **Mw** | **Mp** | **[%]** |
| **1** | 2,3-Dihydroxybenzoesäure | 1/90 | 183 101 | 205 799 | 38,7 |
| **2** | 2,5-Dihydroxybenzoesäure | 0,927/81,5 | 85 627 | 116 371 | 34,7 |
| **3** | 2,6-Dihydroxybenzoesäure | 0,790/70,6 | 377460 | 320395 | 40,2 |
| **4** | 3,4-Dihydroxybenzoesäure | 0,935/83,6 | 204 508 | 242 190 | 38,9 |
| **5** | 3,5-Dihydroxybenzoesäure | 0,421/36,8 | | | |
| **6** | Brenzcatechin | 0,216/19,5 | | | |
| **7** | Vanillinsäure | 0,854/75,5 | | | 32,7 |
| **8** | Guajacol | 1,048/95,6 | 180952 | 212 159 | 48,9 |
| **9** | Gallussäure | 0,046/3,9 | | | |

### Beispiele10 bis 18

Jeweils 120 mg der in der folgenden Tabelle genannten Phenole wurden in 8 ml 0,84 m Natronlauge gelöst und 1 ml Acrylsäure hinzugefügt, so daß sich ein pH-Wert von 4,1 einstellte. Anschließend wurden 20 µl t-Butylhydroperoxid und 50 µl Laccase (Novo) hinzupipettiert. Nach einer Reaktionszeit im Wasserbad von 2 Tagen wurde die erhaltene Lösung in einem Dialyseschlauch mit einem cut-off von 1000 g/mol gegen Wasser dialysiert, um den Restmonomeranteil zu entfernen. Das Retentat wurde anschließend gefriergetrocknet und die Ausbeute bestimmt:

| **Bsp.** | **Phenol** | **Ausbeute** | **Molekulargewicht** | |
|---|---|---|---|---|
| | | **[g]/[%]** | **Mw** | **Mp** |
| **10** | 2,3- Dihydroxybenzoesäure | 1,13/96,5 | 333 903 | 333 795 |
| **11** | 2,5- Dihydroxybenzoesäure | 1,042/89,1 | 292 948 | 395 566 |
| **12** | 3,4- Dihydroxybenzoesäure | 1,078/92,2 | 493 324 | 521 185 |
| **13** | 2,6- Dihydroxybenzoesäure | 0,006/0,5 | | |
| **14** | Gallussäure | 1,003/85,7 | 393 092 | 453 071 |
| **15** | Vanillin | 0,936/80 | | |
| **16** | Vanillinsäure | 0,004/0,36 | | |
| **17** | Guajacol | 0,019/1,6 | | |
| **18** | Brenzcatechin | 0,718/62,5 | 62 749 | 76 530 |

Die Ergebnisse der Beispiele 1 bis 18 machen deutlich, daß bei der Polymerisation ein und desselben Phenols mit unterschiedlichen Monomeren höchst unterschiedliche Polymerisatausbeuten erzielt werden können.

### Allgemeine Versuchsbeschreibung für die Beispiele 19 bis 38

Phenol- und Monomerkomponenten wurden in 36 ml bidest. Wasser gelöst und die resultierende Mischung mit NaOH auf pH 4 eingestellt. Anschließend wurden 100 µl einer (NH₄)₂Fe(SO₄)₂·6 H₂O enthaltenden Lösung (Mohr'sches-Salz) und Laccase hinzupipettiert und die Reaktion durch Zugabe von t-Butylhydroperoxid (t-BHP) gestartet. Die Reaktionsmischung wurde 48h im Wasserbad bei 35°C aufbewahrt, wobei die Viskosität der Lösung erheblich zunahm. Um nicht umgesetztes Monomer aus der Mischung zu entfernen, wurde 24 h gegen bidest. Wasser dialysiert (Dialyseschlauch Serva, cut-off 12-14000), die erhaltene Lösung am Rotationsverdampfer eingeengt und gefriergetrocknet.
Die Molekulargewichte wurden durch Gelpermeationschromatographie ermittelt. Als Molekulargewichtsstandards wurden Pullulanstandards eingesetzt. Aus den Chromatogrammen wurden die folgenden Molekulargewichtsmittel erhalten: Mw: Gewichtsmittel, Mp:
Molekulargewicht am Peak der Elutionskurve, Mn: Zahlenmitel.

**Bsp.19**3.43 ml Acrylsäure
480 mg 3.4-Dihydroxybenzoesäure (DHBS)
0.4 g Acrylamidomethylpropansulfonsäure (AMPS)
80 µl t-BHP
200 µl Laccase
2.8 mg (NH₄)₂Fe(SO₄)₂·6 H₂O Ausbeute: 3.96 g (=88.4%)
Molekulargewichte: Mp=305 000, Mw=340 000

**Bsp.20**3.43 ml Acrylsäure
480 mg 3.4-DHBS
0.4 g AMPS
160 µl t-BHP
200 µl Laccase
5.6 mg (NH₄)₂Fe(SO₄)₂^{·}6 H₂O Ausbeute: 3.21.g (=71.7%)
Molekulargewichte: Mp=155 000, Mw=185 000

**Bsp.21**3.43 ml Acrylsäure
800 mg 3.4-DHBS
0.4 g AMPS
160 µl t-BHP
200 µl Laccase
5.6 mg (NH₄)₂Fe(SO₄)₂^{·}6 H₂O Ausbeute: 2.72 g (=56.7%)
Molekulargewichte: Mp=140 000, Mw=170 000

**Bsp.22**3.04 ml Acrylsäure
800 mg 3.4-DHBS
0.4 g AMPS
160 µl t-BHP
200 µl Laccase
5.6 mg (NH₄)₂Fe(SO₄)₂·6 H₂O Ausbeute.: 3.01g (=68.4%)
Molekulargewichte: Mp=130 000, Mw=165 000

**Bsp.23**3.43 ml Acrylsäure
480 mg 3.4-DHBS
0.4 g Natriummethallylsulfonat (MAS)
80 µl t-BHP
200 µl Laccase
2.8 mg (NH₄)₂Fe(SO₄)₂·6 H₂O Ausbeute: 2.77 g (=61.8%)
Molekulargewichte: Mp33 500=, Mw=40 000

**Bsp.24**3.43 ml Acrylsäure
480 mg 3.4-DHBS
0.4 g MAS
160 µl t-BHP
200 µl Laccase
5.6 mg (NH₄)₂Fe(SO₄)₂·6 H₂O Ausbeute: 1.55 g (=34.6%)
Molekulargewichte: Mp=29 000, Mw=33 500

**Bsp.25**22.0 ml Acrylsäure
2.2 g 3.4-DHBS
185 mg Methylenbisacrylamid (MBAA) (0.8 Gew.%/Monomer)
400 µl t-BHP
1 ml Laccase
15.4 mg (NH₄)₂Fe(SO₄)₂·6 H₂O gelartiges Produkt

**Bsp.26**22.0 ml Acrylsäure
2.2 g 3.4-DHBS
231 mg MBAA (1.0%)
400 µl t-BHP
1 ml Laccase
15.4 mg (NH₄)₂Fe(SO₄)₂ 6 H₂O gelartiges Produkt

**Bsp.27**20.0 ml Acrylsäure
2.2 g 3.4-DHBS
168 mg MBAA (0.8 %)
400 µl t-BHP
1 ml Laccase nicht gelartig

**Bsp.28**20.0 ml Acrylsäure
2.2 g 3.4-DHBS
220.5mg MBAA (1.0 %)
400 µl t-BHP
1 ml Laccase nicht gelartig

**Bsp.29**4.0 ml Acrylsäure
400 mg 3.4-DHBS
23.1 mg MBAA (0.5 %)
80 µl t-BHP
180 µl Laccase
2.8 mg (NH₄)₂Fe(SO₄)₂·6 H₂O nicht gelartig

**Bsp.30** wie **Bsp.29,** aber mit :
12 mg MBAA (0.3 %) nicht gelartig

**Bsp.31**4.0 ml Acrylsäure
400 mg 3.4-DHBS
32 mg MBAA (0.8 %)
80 µl t-BHP
180 µl Laccase
2.8 mg (NH₄)₂Fe(SO₄)₂·6 H₂O gelartiges Produkt

**Bsp.32**3.2 g Acrylamid
0.76 ml Acrylsäure
400 mg 3.4 DHBS
23.1 mg MBAA (0.5 %)
80 µl t-BHP
180 µl Laccase
2.8 mg (NH₄)₂Fe(SO₄)₂^{·}6 H₂O gelartiges Produkt

**Bsp.33**4.0 ml Acrylsäure
286 µl Guajacol
23.1 mg MBAA (0.5 Gew.%/Monomer)
80 µl t-BHP
180 µl Laccase
2.8 mg (NH₄)₂Fe(SO₄)₂·6 H₂O gelartiges Produkt

**Bsp.34**wie **Bsp.33,** aber mit :
12.0 mg MBAA (0.3 Gew.%/Monomer)

**Bsp.35**3.2 g Acrylamid
0.76 ml Acrylsäure
286 µl Guajacol
23.1 mg MBAA (0.5 %)
80 µl t-BHP
180 µl Laccase
2.8 mg (NH₄)₂Fe(SO₄)₂·6 H₂O gelartiges Produkt

**Bsp.36** wie **Bsp.35,** aber mit :
12.0 mg MBAA (0.3 %)

**Bsp.37**286 µl Guajacol
2.8 g Acrylamid
2.07 ml quat. Dimethylaminopropylacrylamid (DIMAPA) (30 Gew.% in Wasser)
80 µl t-BHP
200 µl Laccase
0.7 mg (NH₄)₂Fe(SO₄)₂·6 H₂O Ausbeute: 1.2887 g (=29.3%)

**Bsp.38**286 µl Guajacol
2.8 g Acrylamid
2.07 ml quat. DIMAPA (30%)
80 µl t-BHP
200 µl Laccase
2.8 mg (NH₄)₂Fe(SO₄)₂·6 H₂O Ausbeute: 2.2238 g (=50.5%)

### Beispiel 39

2,2 g 3,4-Dihydroxybenzoesäure (DHBS), 22 ml Acrylsäure und 127 mg Methylenbisacrylamid (MBAA) wurden in 200 ml bidest. Wasser gelöst und mit Natronlauge auf pH 4 eingestellt. Anschließend wurden 15 mg (NH₄)₂Fe(SO₄)₂·6 H₂O (Mohr'sches-Salz) gelöst in 1 ml bidest. Wasser, sowie 1 ml Laccase hinzupipettiert und die Reaktion durch Zugabe von 400 µl t-Butylhydroperoxid gestartet. Die Reaktionsmischung wurde 48 h im Wasserbad bei 35°C aufbewahrt. Nach einer Reaktionszeit von 2 Tagen wurde das Polymerisat im Trockenschrank bei 80°C getrocknet.

### Beispiel 40

Die Herstellung erfolgt wie im Beispiel 39, die eingesetzten Substanzen und Mengen sind wie folgt: 2,2 g 3,4-DHBS, 22 ml Acrylsäure und 0,13 ml Triallylamin

### Beispiel 41

Die Herstellung erfolgt wie im Beispiel 39, die eingesetzten Substanzen und Mengen sind wie folgt: 2,2 g 3,4-DHBS, 17,6 g Acrylamid, 4,62 g Acrylsäure und 127 g MBAA

### Beispiel 42

Die Herstellung erfolgt wie im Beispiel 39, die eingesetzten Substanzen und Mengen sind wie folgt: 2,2 g 3,4-DHBS, 2,2 g AMPS und 19,8 g Acrylamid
Molekulargewichte des Polymers: Mw=940 000, Mn=144 300

### Beispiel 43

Die Herstellung erfolgt wie im Beispiel 39, die eingesetzten Substanzen und Mengen sind wie folgt: 2,2 g 3,4-DHBS, 2,2 g MAS und 22 g Acrylamid
Molekulargewichte des Polymers: Mw=29 300, Mn=13 770

### Beispiel 44

Mit den folgenden vergleichenden Versuchsergebnissen wird gezeigt, daß die enzymatische Pfropfmethode gemäß der DE 43 31 878 A1 bei den Phenolen keine Pfropfung bewirkt und daß eine enzymfreie radikalische Polymerisation nur sehr geringe Phenolumsätze hervorruft. Erst durch den erfindungsgemäßen Zusatz von organischen Peroxiden wird ein nenneswerter Phenolumsatz erreicht:

In 9 ml Wasser werden 1 g Acrylamid bzw. Acrylsäure und 120 mg 3.4-Dihydroxybenzoesäure gelöst. Dazu wurden je nach Ansatz 20µl t-Butylhydroperoxid, 50µl Laccase bzw. 0,7 mg (NH₄)₂Fe(SO₄)₂, gelöst in 100µl Wasser, gegeben. Nach zweitägiger Reaktionsdauer wurde die Reaktionsmischung auf etwa 80 ml verdünnt und jeweils dreimal mit etwa 50 ml Äthlyacetat ausgeschüttelt. Die vereinigten organischen Phasen wurden am Rotationsverdampfer eingeengt und 12 h bei Zimmertemperatur/40 Torr getrocknet. Der erhaltene Feststoff wurde in Ethanol aufgenommen und der Phenolgehalt photometrisch bestimmt. Aus der Differenz zur eingesetzten Menge an Phenol ergibt sich der in den folgenden Tabellen ausgewiesene Anteil an umgesetztem Phenol:

| **Ansatz (mit Acrylsäure)** | **Abs. bei λ=295 nm** | **% Phenol umgesetzt** |
|---|---|---|
| Laccase ohne org. Peroxid | 0,527 | 0 |
| Laccase mit org Peroxid | 0,355 | 32,6 |
| Laccase mit Eisen und | | |
| org. Peroxid | 0,379 | 28,1 |

| **Ansatz (mit Acrylamid)** | **Abs. bei λ=295 nm** | **% Phenol umgesetzt** |
|---|---|---|
| Laccase ohne org. Peroxid | 0,507 | 0 |
| Laccase mit org. Peroxid | 0,437 | 13,8 |
| Laccase mit Eisen und | | |
| org. Peroxid | 0,410 | 19,1 |
| ohne Laccase aber mit Eisen | | |
| und org. Peroxid | 0,492 | 3,0 |

### Bestimmung der Retention

Das Rückhaltevermögen der vernetzten Polymerisate für wäßrige Flüssigkeiten wird für eine 0,9 %ige Kochsalzlösung bestimmt. Der Test wird, nachdem die Polymerisate getrocknet, gemahlen und auf 180 bis 800 µm abgesiebt sind, wie folgt durchgeführt:
Es werden 200 mg Prüfsubstanz in einem Teebeutel eingeschweißt und für 30 Minuten in einer 0,9%igen NaCl-Lösung eingetaucht, 10 Minuten abgetropft und in einer Schleuder (23 cm Durchmesser, 1400 UPM) 5 Minuten geschleudert und gewogen. Einen Teebeutel ohne wasserabsorbierendes Polymerisat läßt man als sogenannten Blindwert mitlaufen:
RETENTION = (Auswaage - Blindwert) / Einwaage Polymer (g/g)

| **Beispiel** | **Retention** |
|---|---|
| | **[g 0,9 %ige NaCl-Lsg/g Polymer]** |
| **25** | 36,4 |
| 26 | 48,0 |
| 33 | 40,6 |
| 34 | 54,7 |
| **35** | 36,8 |
| **36** | 39,1 |
| **39** | 22,4 |

### Calciumcarbonat-Dispergierfähigkeit

Ein wesentliches Eigenschaftsmerkmal von Cobuildern in Wasch- und Reinigungsmitteln ist die Fähigkeit zur Verhinderung schwerlöslicher Niederschläge von Erdalkali- oder Schwermetallsalzen, die z. B. Inkrustationen auf Wäschestücken hervorrufen. Für die Bestimmung der Calciumcarbonat-Dispergierfahigkeit (CCDK) [nach Richter Winkler in Tenside Surfactants Detergents 24 (1987) S. 213 - 216] wurde wie folgt vorgegangen:

1 g Produkt (Trockensubstanz) wird in 100 ml Wasser dest. gelöst und mit 10 ml 10%iger Natriumcarbonat-Lösung versetzt. Mit Natronlauge wird ein pH-Wert von 11 eingestellt und mit 0,25 ml Calciumacetat-Lösung bis zum Auftreten einer ersten dauerhaften Trübung titriert. Die Angabe der CCDK erfolgt in mg CaCO₃/g Trockensubstanz

| **Beispiel** | **CCDK** |
|---|---|
| **19** | 111 |
| **22** | 137 |
| **24** | 136 |
| Handelsprodukt | 256 |
| (Acrylsäure/Malein- | |
| säure-Copolymer) | |

### Calciumbindevermögen nach dem Hampshire-Test:

Eine Lösung aus lg Produkt (Trockensubstanz) in 100ml Wasser wird mit 2ml 10%ige Natriumcarbonatlösung versetzt und mit Salzsäure oder Natronlauge auf pH 11 eingestellt. Man titriert mit 0,25mol Calciumacetatlösung bis zum Auftreten einer ersten dauerhaften Trübung. Die Angabe erfolgt in mg CaCO₃/g Trockensubstanz:

| **Beispiel** | **Hampshire-Wert** |
|---|---|
| | **[mg CaCO**_{**3**}**/g TS]** |
| **19** | 893 |
| **20** | 664 |
| **21** | 1058 |
| **22** | 822 |
| **24** | 1031 |
| Maleinsäure/ | 590 |
| Acrylsäure- | |
| Copolymer | |

Die erfindungsgemäßen Polymerisate zeigen ein ausgezeichnetes Calciumbindevermögen nach Hampshire, das deutlich über dem handelsüblicher synthetischer Copolymerisate liegt, die als Cobuilder für Waschmittel eingesetzt werden.

### Hartwasserkochbeständigkeit:

Dieser Test gibt ein Maß für die Fähigkeit des Polymers, eine Ausfällung von Hartwasserbestandteilen zu inhibieren.
Eine Calciumchloridlösung (33,6° dH reine Calciumhärte) wird mit einer bestimmten Menge an 10%iger Polymerisatlösung versetzt, 5 Minuten auf einer Heizplatte erhitzt und anschließend bezüglich Trübung beurteilt. Durch Variation der Polymermenge wird diejenige Konzentration ermittelt, bei der erstmals eine klare Lösung erhalten wird. Die Angabe erfolgt hierbei in Gramm Polymer pro Liter Hartwasser.

| **Beispiel** | **Hartwasserbeständigkeit** |
|---|---|
| | **[g Polymer/l]** |
| **19** | 2,0 |
| 20 | 2,0 |
| 21 | 2,0 |
| **24** | 2,5 |
| 42 | 0,5 |
| **43** | 0,5 |
| Maleinsäure/ | 2,0 |
| Acrylsäure- | |
| Copolymer | |

Die Ergebnisse machen deutlich, daß mit den erfindungsgemäßen Polymerisaten eine wirksame Inhibierung von Kesselstein oder ähnlichen Ablagerungen erreicht bzw. Ausfällungen von Bestandteilen des Hartwassers verhindert werden kann. Die Hartwasserbeständigkeit ist vergleichbar bzw. besser als kommerziell verfügbare Handelsprodukte auf Basis von Polyacrylaten.

### Flockungswirkung

Die Flockungswirkung der erfindungsgemäßen Polymerisate wird an einer im Labor hergestellten Blautonsuspension gemessen. Diese Suspension besteht aus 18 g Blauton in 1 1 Wasser und wird mit einem hochtourigen Rührer suspendiert und in einen 250 ml Prüfzylinder von 5 cm Durchmesser überführt. Dort wird mit einem langsamen Fingerrührer weitergerührt und mit 2,5 ml 20%iger Aluminiumsulfatlösung versetzt. 20 sec danach werden 2 oder 4 ppm Flockungsmittelpolymer zugesetzt und nach weiteren 5 sec wird der Rührer abgestellt. Als Flockungswert mißt man dann die Zeit des Absinkens der Oberfläche der geflockten Blautonsuspension zwischen zwei, 4 cm auseinanderliegenden Markierungen in der Mitte des Zylinders.

| **Beispiel** | **Flockungszeit [sec]** | **Flockungszeit [sec]** |
|---|---|---|
| | **2 ppm Polymer** | **4 ppm Polymer** |
| **37** | 19,4 | 11,9 |
| **38** | 21,2 | 12,1 |
| Handelsübliches Flockungs-Copolymerisat auf Basis Acrylamid/quat.Dimethylaminopropylacrylamid | 10-15 | |

### Bestimmung der Abbaubarkeit

Die Abbaubarkeit der untersuchten Polymere wurde anhand der Verringerung des Molekulargewichts der synthetisierten Polymere untersucht. Es wurden unterschiedliche Pfropfpolymere auf Phenol/Acrylsäurebasis hergestellt und diese in Flüssigkulturen einer Inkubation mit Weißfäule hervorrufenden Basidomyceten unterworfen. Bei dem ausgesuchten Stamme handelte es sich um Pleurotus ostreatus.

### Durchführung der Abbauuntersuchungen

### Flüssigkulturen

Die Flüssigkulturen wurden zunächst in jeweils drei 500 ml Erlenmeyerkolben mit 100 ml Medium angezogen. Die Beimpfung erfolgte mit jeweils drei 1 cm²-großen Malz-Agar-Stücken der Stammkultur, die Inkubationszeit betrug drei Wochen im dunklen Kulturraum bei 23° C.

### Durchführung des Abbauversuches

Je Erlenmeyerkolben wurden 0.5 g Polymer in 100 ml des entsprechenden Mediums gelöst, wobei man jeweils drei Parallelen pro Polymerspezies verwendete. Nach Autoklavieren und Abkühlen wurde jeweils 1 ml der Polymerlösung für die Molmassenbestimmung durch HPLC (GPC) entnommen. Die drei Wochen alten Flüssigkulturen wurden mit Hilfe eines Turraxstabes homogenisiert und 1 ml der entstandenen Suspension zu den Polymerlösungen pipettiert. Die Inkubation erfolgte über einen Zeitraum von 48 Tagen im dunklen Kulturraum bei 23° C. Nach Ablauf der Inkubation wurde erneut 1 ml des Kulturmediums entnommen und die Molmasse des enthaltenen Polymers bestimmt.

### Hochdruck-Flüssigkeitschromatographie

Zur Vorbereitung der HPLC wurden die Proben zentrifugiert, um unlösliche Mycelreste zu entfernen. Die Molekulargewichtsbestimmung erfolgte mittels einer größenausschlußchromatographischen Trennung (Size-Exclusion-Chromatographie, SEC) an einem TSK-Gelund HEMA BIO-Säulensatz und wurde mit einen Dioden-Array-Detektor angezeigt. Zur Bestimmung des Molekulargewichts und dessen Verteilung wurde eine Eichung mit Polyacrylsäurestandards (Mp von 855 bis 11000000, Na-Salz linear, (PPS, Mainz) erstellt.

### Geräte:

Hochdruck-Flüssigkeitschromatographie-System (Hewlett Packard, Palo Alto, Kalifornien, USA, 1090 L Liquid Chromatograph mit Pascal -Workstation und Dioden-Array-Detektor, DAD)
- SEC-Säulen:: TSKgel 6000 PWxl, TSKgel 5000 PWxl (je 13 µm; 7.8*300 mm) (ToSoHaas, Stuttgart) und HEMA BIO 1000 (10 µm;8*300 mm) (Polymer Standard Service PPS, Mainz)

### SEC-Bedingungen:

- Eluent:: 0,15M NaCl-Lösung in hochgereinigtem Wasser (Water-Purification-System "Milli-Q", Millipor, Eschborn
- Fluß:: 1 ml/min
- Detektor:: Dioden-Array-Detektor DAD, Hewlett Packard, Palo Alto, Kalifornien, USA
- Temperatur:: 35°C
- Eichstandards:: Polyacrylsäure-Mp von 855 bis 11000000, Na-Salz, linear (PPS, Mainz)
- Injektionsvolumen:: 20µl
- Interner Standard:: Benzolsulfonsäure Na-Salz, 0,1 mg/ml Probe

Für die Acrylsäurepfropfpolymere ergaben sich folgende Molekulargewichtsveränderungen:

| **Phenol** | **Molekulargewicht** | | **%Abnahme** |
|---|---|---|---|
| **[10% im Pfropfpolymer]** | **vor Inkubation** | **nach 48 Tagen** | |
| 3.4-Dihydroxybenzoesäure | 303 522 | 124 841 | 58.9 |
| 2,5-Dihydroxybenzolsulfonsäure | 251 093 | 137 846 | 45.1 |

## Patentansprüche

1. Hydrophile Co- bzw. Pfropfpolymerisate aus Phenolen und ungesättigten Monomeren, **dadurch gekennzeichnet, daß** die Phenole mindestens eine OH-Gruppe pro aromatischem Sechserring aufweisen und daß sie durch radikalische Polymerisation mit Peroxiden und/oder Hydroperoxiden in Gegenwart oxidierender Enzyme erhältlich sind.

2. Hydrophile Polymerisate gemäß Anspruch 1, **dadurch gekennzeichnet, daß** die Enzyme aus der Gruppe Laccase, Lignin-Peroxidase und Mangan-Peroxidase ausgewählt sind.

3. Hydrophile Polymerisate gemäß Anspruch 1 und 2, **dadurch gekennzeichnet, daß** organische Peroxide/Hydroperoxide eingesetzt werden.

4. Hydrophile Polymerisate gemäß Anspruch 1 bis 3, **dadurch gekennzeichnet, daß** anionische oder kationische oder neutrale wasserlösliche Monomere bzw. Mischungen davon verwendet werden.

5. Hydrophile Polymerisate gemäß Anspruch 4, **dadurch gekennzeichnet, daß** die anionische Monomerkomponente aus der Gruppe (Meth)acrylsäure, Maleinsäure(anhydrid), (Meth)acrylamidomethylpropansulfonsäure und (Meth)allylsulfonat ausgewählt ist, die kationische Monomerkomponente aus der Gruppe N,N-Dimethylaminopropyl(meth)acrylamid und N,N-Dimethylaminoethyl(meth)acrylat ausgewählt ist, wobei der Aminstickstoff gegebenenfalls quaterniert oder neutralisiert ist und die neutrale Monomerkomponente aus der Gruppe (Meth)acrylamid, (Meth)acrylnitril, Hydroxyethyl(meth)acrylat, N-Vinylpyrrolidon und Methoxypolyethylenglykol(meth)acrylat ausgewählt ist.

6. Hydrophile Polymerisate gemäß Anspruch 1 bis 5, **dadurch gekennzeichnet, daß** vernetzende Monomere verwendet werden.

7. Hydrophile Polymerisate gemäß Anspruch 1 bis 6, **dadurch gekennzeichnet, daß** ihre Oberfläche mit einem Oberflächennachvernetzer nachvernetzt ist.

8. Hydrophile Polymerisate gemäß Anspruch 1 bis 7, **dadurch gekennzeichnet, daß** der Phenolgehalt 25 Gew.%, vorzugsweise 15 Gew.% und besonders bevorzugt 10 Gew.% nicht überschreitet.

9. Hydrophile Pfropfpolymerisate gemäß Anspruch 1 bis 8, **dadurch gekennzeichnet, daß** die Phenolkomponente 1 bis 3 Hydroxygruppen enthält.

10. Hydrophile Pfropfpolymerisate gemäß Anspruch 9, **dadurch gekennzeichnet, daß** die Phenolkomponente zusätzlich einen oder mehrere Substituenten vom Typ Aldehyd, Keton, Carbonsäure, Alkoxy, Amino, Alkyl, Alkenyl, Saccharid, Phosphat und Sulfonat enthält.

11. Hydrophile Polymerisate gemäß Anspruch 1 bis 10, **dadurch gekennzeichnet, daß** die Phenolkomponente aus der Gruppe Mono-, Di- und Trihydroxybenzol, Mono-, Di und Trihydoxybenzoesäure, Methoxy- und Dimethoxyphenole bzw. subst. Methoxy- und Dimethoxyphenole ausgewählt ist.

12. Hydrophile Polymerisate gemäß Anspruch 1 bis 11, **dadurch gekennzeichnet, daß** die organische Peroxid/Hydroperoxidkomponente aus der Gruppe t-Butylhydroperoxid, Mono- und Dihydroperoxide des Dioxans und Cumolhydroperoxid ausgewählt ist.

13. Verfahren zur Herstellung hydrophiler Polymerisate nach einem der Ansprüche 1 bis 12, **dadurch gekennzeichnet, daß** in Wasser oder Wasser/Lösemittelgemischen ungesättigte Monomere und Phenolkomponenten in Gegenwart von Peroxiden/Hydroperoxiden und radikalisch oxidierenden Enzymen nach dem Verfahren einer Lösungs- oder Suspensionspolymerisation polymerisiert werden, niedermolekulare Bestandteile gegebenenfalls abgetrennt werden und die Polymerisate gegebenenfalls aus der Lösung isoliert und nachbehandelt werden.

14. Verfahren zur Herstellung hydrophiler Polymerisate nach Anspruch 13, **dadurch gekennzeichnet, daß** die Polymerisation bei pH-Werten von 3 bis 8, vorzugsweise bei pH 4 bis 5 durchgeführt wird.

15. Verfahren zur Herstellung hydrophiler Polymerisate nach Anspruch 13 und 14, **dadurch gekennzeichnet, daß** die Polymerisation bei Temperaturen von 10 bis 60°C, vorzugsweise bei 20 bis 50°C durchgeführt wird.

16. Verfahren zur Herstellung hydrophiler Polymerisate nach Anspruch 13 bis 15, **dadurch gekennzeichnet, daß** die Polymerisation in Gegenwart reduzierender Schwermetallsalze durchgeführt wird.

17. Verfahren zur Herstellung hydrophiler Polymerisate nach Anspruch 13 bis 16, **dadurch gekennzeichnet, daß** niedermolekulare Bestandteile der Polymerisatlösung durch Dialyse abgetrennt werden.

18. Verfahren zur Herstellung hydrophiler Polymerisate nach Anspruch 13 bis 17, **dadurch gekennzeichnet, daß** die Polymerisate durch Fällung oder Entfernung des Wassers oder des Wasser/Lösemittels isoliert und gegebenenfalls zerkleinert, getrocknet, gemahlen und gesiebt werden.

19. Verfahren zur Herstellung hydrophiler Polymerisate nach Anspruch 18, **dadurch gekennzeichnet, daß** die isolierten Polymerisate einer Oberflächennachvernetzung bei erhöhter Temperatur unterzogen werden.

20. Verwendung der Polymerisate nach einem der Ansprüche 1 bis 12 als Mittel zur Absorption von Wasser- und wäßrigen Flüssigkeiten, zur Wasserenthärtung, zur Dispergierung, zur Flockung, zur Verdickung und zur Agglomerierung.

## Claims

1. Hydrophilic co- or graft polymerisates of phenols and non-saturated monomers, **characterised in that** the phenols comprise at least one OH group per aromatic six-membered ring, and that they can be achieved by radical polymerisation with peroxides and/or hydro peroxides in the presence of oxidising enzymes.

2. Hydrophilic polymerisates according to Claim 1, **characterised in that** said enzymes are selected from the group consisting of laccase, lignin peroxidase and manganese peroxidase.

3. Hydrophilic polymerisates according to the Claims 1 and 2, **characterised in that** organic peroxides/hydro peroxides are used.

4. Hydrophilic polymerisates according to the Claims 1 to 3, **characterised in that** anionic or cationic or neutral water-soluble monomers or mixtures thereof are used.

5. Hydrophilic polymerisates according to Claim 4, **characterised in that** said anionic monomer component is selected from the group consisting of (meth)acrylic acid, maleic acid (anhydride), (meth)acryl-amido methyl-propane sulphonic acid and (meth)allyl sulphonate, that said cationic monomer component is selected from the group consisting of N,N-dimethyl amino propyl (meth)acryl amide and N,N-dimethyl amino ethyl (meth)acrylate, with the amine nitrogen being possibly quaternised or neutralised, and that said neutral monomer component is selected from the group consisting of (meth)acryl amide, (meth)acryl nitrile, hydroxyl ethyl (meth)acrylate, N-vinyl pyrrolidone and methoxy polyethylene glycol (meth)acrylate.

6. Hydrophilic polymerisates according to the Claims 1 to 5, **characterised in that** cross-linking monomers are used.

7. Hydrophilic polymerisates according to the Claims 1 to 6, **characterised in that** their surface is subsequently cross-linked by means of a surface cross-linking agent.

8. Hydrophilic polymerisates according to the Claims 1 to 7, **characterised in that** the phenol level does not 25 % by weight, preferably 15 % by weight and particularly preferably 10 % by weight.

9. Hydrophilic graft polymerisates according to the Claims 1 to 8, **characterised in that** said phenol component contains 1 to 3 hydroxyl groups.

10. Hydrophilic graft polymerisates according to Claim 9, **characterised in that** said phenol component contains additionally one or several substituents of the aldehyde, keton, carbonic acid, alkoxy, amino, alkyl, alkenyl, saccharide, phosphate and sulphonate type.

11. Hydrophilic polymerisates according to the Claims 1 to 10, **characterised in that** said phenol component is selected from the group consisting of mono, di- and tri-hydroxy benzene, mono, di-and tri-hydroxy-benzoic acid, methoxy and di-methoxy phenols or subst. methoxy and di-methoxy phenols.

12. Hydrophilic polymerisates according to the Claims 1 to 11, **characterised in that** said organic peroxide/hydro peroxide component is selected from the group consisting of t-butyl hydro-peroxide, mono- and di-hydro peroxide of the dioxan, and cumene hydro-peroxide.

13. Method of producing hydrophilic polymerisates according to any of the Claims 1 to 12, **characterised in that** unsaturated monomers and phenol components are polymerised in water or water/solvent mixtures in the presence of peroxides/hydro peroxides and radically oxidising enzymes in correspondence with the technique of solution or suspension polymerisation, that low-molecular components are possibly isolated and that the polymerisates are possibly isolated from the solution and subjected to a subsequent treatment.

14. Method of producing hydrophilic polymerisates according to Claim 13, **characterised in that** polymerisation is carried out at pH values from 3 to 8, preferably at a pH value of 4 to 5.

15. Method of producing hydrophilic polymerisates according to the Claims 13 and 14, **characterised in that** polymerisation is carried out at temperatures from 10 to 60 °C, preferably in the range from 20 to 50 °C.

16. Method of producing hydrophilic polymerisates according to the Claims 13 to 15, **characterised in that** polymerisation is carried out in the presence of reducing heavy-metal salts.

17. Method of producing hydrophilic polymerisates according to the Claims 13 to 16, **characterised in that** low-molecular components of the polymerisate solution are isolated by dialysis.

18. Method of producing hydrophilic polymerisates according to the Claims 13 to 17, **characterised in that** said polymerisates are isolated by precipitation or by removal of the water or the water/solvent mixture and are possibly comminuted, dried, ground and screened.

19. Method of producing hydrophilic polymerisates according to Claim 18, **characterised in that** said isolated polymerisates are subjected to subsequent surface cross-linking at an elevated temperature.

20. Application of the polymerisates according to any of the Claims 1 to 12 as agent for absorbing water and aqueous liquids, as water softening agent, as dispersing agent, as flocculating agent, as thickening agent and as agglomerating agent.

## Revendications

1. Copolymères ou polymères greffés hydrophiles de phénols et monomères phénoliques et non saturés, **caractérisés en ce que** les phénols comprennent au moins un groupe hydroxyle par composé cyclique à six composants, et **en ce qu'**on peut les achever par polymérisation radicale avec des peroxydes et/ou des hydro peroxydes en présence des enzymes oxydants.

2. Polymères hydrophiles selon la revendication 1, **caractérisés en ce que** lesdits enzymes sont choisis parmi le groupe composé de la laccase, la peroxydase de lignine, et de la peroxydase du manganèse.

3. Polymères hydrophiles selon les revendications 1 et 2, **caractérisés en ce que** des peroxydes organiques/hydro peroxydes sont utilisés.

4. Polymères hydrophiles selon les revendications 1 à 3, **caractérisés en ce que** des monomères anioniques ou cationiques ou des monomères neutres solubles en de l'eau ou leurs mélanges sont utilisés.

5. Polymères hydrophiles selon la revendication 4, **caractérisés en ce que** ledit composant monomère anionique est choisi du groupe constitué par l'acide (méth)acrylique, (l'anhydre de) l'acide maléique, l'acide sulfonique de méthyle propane (méth)acrylo-amide, **en ce que** ledit composant monomère cationique est choisi du groupe constitué par le (méth)acrylo-amide de N,N-diméthylaminopropyle(méth)acrylo-amide et le (méth)acrylate de N,N-diméthylamino-éthyle, l'azote de l'amine étant éventuellement quaternisé ou neutralisé, et **en ce que** ledit composant monomère neutre est choisi du groupe constitué par l'amide (méth)acrylique, le nitrile (méth)acrylique, le (méth)acrylate de hydroxyle éthyle, le pyrrolidone de N-vinyle et le (méth)acrylate de méthoxypolyéthylène-glycol.

6. Polymères hydrophiles selon les revendications 1 à 5, **caractérisés en ce que** des monomères réticulant sont utilisés.

7. Polymères hydrophiles selon les revendications 1 à 6, **caractérisés en ce que** leur surface est ultérieurement réticulée moyennant un agent réticulant superficiel.

8. Polymères hydrophiles selon les revendications 1 à 7, **caractérisés en ce que** le niveau phénolique ne dépasse pas 25 % par poids, de préférence 15 % par poids et de manière particulièrement préférée 10 % par poids.

9. Polymères greffés hydrophiles selon les revendications 1 à 8, **caractérisés en ce que** ledit composant phénolique contient 1 to 3 hydroxyles.

10. Polymères greffés hydrophiles selon la revendication 9, **caractérisés en ce que** ledit composant phénolique contient au plus un ou plusieurs groupes substituents du type aldehyde, cétone, acide carboxylique, alkoxy, amino, alkyle, alkenyle, saccharide, phosphate et sulfonate.

11. Polymères hydrophiles selon les revendications 1 à 10, **caractérisés en ce que** ledit composant phénolique est choisi du groupe constitué par le mono-, di- et tri-hydroxybenzène, l'acide de mono-, di- et tri-hydroxybenzène, les méthoxy- et di- méthoxyphénoles ou des méthoxy- et di-méthoxyphenoles subst.

12. Polymères hydrophiles selon les revendications 1 à 11, **caractérisés en ce que** ledit composant peroxyde/hydroperoxyde organique est choisi du groupe constitué par le t-butyle-hydroperoxyde, le mono- et di-hydroperoxyde de dioxane, et le cumènehydroperoxyde.

13. Procédé à produire des polymères hydrophiles selon une quelconque des revendications 1 à 12, **caractérisé en ce que** des monomères non saturés et des composants phénoliques sont polymérisés dans de l'eau ou dans des mélanges des l'eau/solvant en présence des peroxydes/hydro peroxydes et des enzymes d'oxydation radicale, en correspondance avec la technique de la polymérisation à solution ou suspension, **en ce que** des composants de masse moléculaire peu élevée sont éventuellement isolés, et **en ce que** les polymères sont éventuellement isolées de la solution et soumis à un traitement ultérieur.

14. Procédé à produire des polymères hydrophiles selon la revendication 13, **caractérisé en ce que** la polymérisation se fait aux valeurs pH entre 3 et 8, de préférence à une valeur pH de 4 à 5.

15. Procédé à produire des polymères hydrophiles selon les revendications 13 et 14, **caractérisé en ce que** la polymérisation se fait à une température de 10 à 60 °C, de préférence dans la gamme entre 20 et 50 °C.

16. Procédé à produire des polymères hydrophiles selon les revendications 13 à 15, **caractérisé en ce que** la polymérisation se fait en présence des sels réduisants de métaux lourds.

17. Procédé à produire des polymères hydrophiles selon les revendications 13 à 16, **caractérisé en ce que** des composants de masse moléculaire peu élevée de la solution du polymère sont isolés par voie de dialyse.

18. Procédé à produire des polymères hydrophiles selon les revendications 13 à 17, **caractérisé en ce que** lesdits polymères sont isolés par précipitation ou par l'élimination de l'eau ou du mélange de l'eau/solvant, et sont éventuellement pulvérisé, trituré et tamisé.

19. Procédé à produire des polymères hydrophiles selon la revendication 18, **caractérisé en ce que** lesdits polymères isolés sont soumis à une réticulation superficielle ultérieure à une température élevée.

20. Application des polymères selon une quelconque des revendications 1 à 12 en tant qu'un agent à absorber de l'eau et des liquides aqueux, en tant qu'un agent adoucissant pour de l'eau, en tant qu'un agent dispersant, un agent floculant, un agent épaissant et en tant qu'un agent agglomérant.
